# EUROPÄISCHE PATENTANMELDUNG

(11) **EP 1 522 703 A2**
(43) Veröffentlichungstag der Anmeldung: **13.04.2005**
(21) Anmeldenummer: 04104586.5
(22) Anmeldetag: 22.09.2004
(51) Int. Cl.: F02D 41/38, F02D 41/40

(54) **Verfahren und Vorrichtung zum Steuern einer Brennkraftmaschine**

(30) Priorität: 09.10.2003 DE 10346970
(71) Anmelder: SIEMENS AKTIENGESELLSCHAFT, 80333 München (DE)
(72) Erfinder: Eser, Gerhard, 93155, Hemau (DE); Zhang, Hong, 93105, Tegernheim (DE)

(57) **Zusammenfassung**

Eine Brennkraftmaschine hat eine Zuführeinrichtung für Kraftstoff, mit der ein Einspritzventil wirkverbunden ist. Eine zuzumessende Kraftstoffmasse (MFF) wird abhängig von einer Lastgröße und einer das Strahlbild des zuzumessenden Kraftstoffs und/oder die Kraftstoffzerstäubung des Einspritzventils kennzeichnenden Größe ermittelt. So wird auf einfache Weise eine präzise Steuerung der Brennkraftmaschine mit gleichzeitig geringen Schadstoffemissionen erreicht.

## Beschreibung

Die Erfindung betrifft ein Verfahren und eine Vorrichtung zum Steuern einer Brennkraftmaschine.

Es sind Brennkraftmaschinen bekannt mit einem Ansaugtrakt, einem oder mehreren Zylindern, einer Zuführeinrichtung für Kraftstoff und jeweils den Zylindern zugeordneten Einspritzventilen, die wirkverbunden sind mit der Zuführeinrichtung für Kraftstoff. Die Einspritzventile sind entweder in Ansaugrohren angeordnet, die Bestandteil des Ansaugtraktes sind und hin zu Einlässen der Zylinder geführt sind, oder die Einspritzventile sind direkt in dem Zylinderkopf angeordnet und messen den Kraftstoff direkt in die Brennräume der Zylinder der Brennkraftmaschine zu. Die Einspritzventile werden zunehmend mit sehr hohen Kraftstoffdrücken beaufschlagt, die im Falle von Brennkraftmaschinen mit Benzin als Kraftstoff bis zu 200 bar erreichen können. Darüber hinaus wird für Einspritzventile als Stellantrieb der elektromagnetische Stellantrieb zunehmend durch piezoelektrische Aktoren abgelöst. Piezoelektrische Aktoren haben u. a. den Vorteil, dass das Einspritzventil mit einem variablen Ventilhub der Düsennadel betrieben werden kann.

Immer strengere gesetzliche Vorschriften bezüglich Schadstoffemissionen machen es erforderlich, die Schadstoffemissionen während des Betriebs der Brennkraftmaschine so gering wie möglich zu halten.

Die Aufgabe der Erfindung ist es, ein Verfahren und eine Vorrichtung zu schaffen, das bzw. die geringe Schadstoffemissionen der Brennkraftmaschine während ihres Betriebs gewährleistet.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Steuern einer Brennkraftmaschine mit einer Zuführeinrichtung für Kraftstoff, mit der ein Einspritzventil verbunden ist, bei dem eine zuzumessende Kraftstoffmasse abhängig von einer Lastgröße und einer das Strahlbild des zuzumessenden Kraftstoffs und/oder die Kraftstoffzerstäubung eines Einspritzventils kennzeichnenden Größe ermittelt wird.

Die Erfindung nutzt die Erkenntnis, dass das Strahlbild des zuzumessenden Kraftstoffs, also die Ausbildung des Einspritzkegels, und/oder die Kraftstoffzerstäubung einen entscheidenden Einfluss auf die Aufbereitung des Luft/Kraftstoff-Gemisches in dem Brennraum des Zylinders der Brennkraftmaschine haben und so die Güte des Verbrennungsprozesses maßgeblich beeinflussen. Von der Güte des Verbrennungsprozesses hängen wiederum die Schadstoffemissionen der Brennkraftmaschine ab. Die Erfindung nützt ferner die Erkenntnis, dass das Strahlbild und/oder die Kraftstoffzerstäubung maßgeblichen Einfluss auf Kraftstoffablagerungen an den Innenwänden des Zylinders in dem Kolbenboden eines dem Zylinder zugeordneten Kolbens und/oder an Wänden des Saugrohres, das dem Zylinder zugeordnet ist, haben. Dies wirkt sich ebenfalls auf die Güte des Verbrennungsprozesses des Luft/Kraftstoff-Gemisches aus und hat auch entscheidenden Einfluss auf Kohlenwasserstoff-Emissionen der Brennkraftmaschine.

In einer vorteilhaften Ausgestaltung der Erfindung ist die Größe, die das Strahlbild des zuzumessenden Kraftstoffs und/oder die Kraftstoffzerstäubung eines Einspritzventils kennzeichnet, ein Kraftstoff in der Zuführeinrichtung für Kraftstoff. Dies hat den Vorteil, dass der Kraftstoffdruck in der Regel ohnehin erfasst oder ermittelt wird und zwar z.B. zum Einstellen eines vorgegebenen Kraftstoffdrucks im Sinne einer Regelung des Kraftstoffdrucks.

In einer weiteren vorteilhaften Ausgestaltung der Erfindung ist die Größe, die das Strahlbild des zuzumessenden Kraftstoffs und/oder die Kraftstoffzerstäubung eines Einspritzventils kennzeichnet, eine Größe, die charakteristisch ist für den Hub einer Düsennadel des Einspritzventils.

In einer weiteren vorteilhaften Ausgestaltung der Erfindung wird ein Basiswert der Kraftstoffmasse abhängig von einer Lastgröße ermittelt und der Basiswert abhängig von einem ersten Korrekturwert korrigiert, der abhängt von dem Kraftstoffdruck und/oder dem Hub der Düsennadel. Dies hat den Vorteil, dass auf einfache Weise die Güte der Gemischaufbereitung berücksichtigt werden kann.

In einer weiteren vorteilhaften Ausgestaltung der Erfindung wird der Basiswert der Kraftstoffmasse abhängig von der Lastgröße ermittelt und ein Zusatzwert der Kraftstoffmasse abhängig von einer Kühlmitteltemperatur und/oder einer Ansauglufttemperatur und/oder einer Öltemperatur und/oder einer Zeitdauer seit dem Motorstart der Brennkraftmaschine und/oder der Drehzahl ermittelt. Der Zusatzwert der Kraftstoffmasse berücksichtigt so einen erhöhten Kraftstoffbedarf, der für eine ordnungsgemäße Verbrennung des Luft/Kraftstoff-Gemisches bei z.B. noch nicht betriebswarmer Brennkraftmaschine benötigt wird.

Der Zusatzwert der Kraftstoffmasse wird dann abhängig von einem zweiten Korrekturwert korrigiert, der abhängt von dem Kraftstoffdruck und/oder dem Hub der Düsennadel. Dies hat den Vorteil, dass Kraftstoffablagerungen an den Innenwänden des Zylinders und des Bodens des Kolbens und gegebenenfalls der Saugrohre noch präziser berücksichtigt werden können.

In einer weiteren vorteilhaften Ausgestaltung der Erfindung wird sowohl der Basiswert abhängig von dem ersten Korrekturwert korrigiert als auch der Zusatzwert abhängig von dem zweiten Korrekturwert korrigiert. Dadurch können dann bei der Kraftstoffzumessung sowohl die Güte der Gemischaufbereitung als auch die Menge der Kraftstoffablagerungen an den Innenwänden des Zylinders, des Kolbens und gegebenenfalls der Saugrohre präzise berücksichtigt werden.

In einer weiteren vorteilhaften Ausgestaltung der Erfindung wird die zuzumessende Kraftstoffmasse abhängig von der das Strahlbild des zuzumessenden Kraftstoffs und/oder die Kraftstoffzerstäubung eines Einspritzventils kennzeichnenden Größe lediglich in einem Betriebszustand des Motorstarts und/oder des Warmlaufs ermittelt. Dies hat den Vorteil eines geringeren Rechenaufwands und hat dennoch keinen wesentlichen Anstieg der Schadstoffemissionen zur Folge.

Ausführungsbeispiele der Erfindung werden im folgenden anhand der schematischen Zeichnungen erläutert. Es zeigen:
- Figur 1: eine Brennkraftmaschine mit einer Steuereinrichtung und
- Figur 2: ein Ablaufdiagramm eines Programms zum Steuern der Brennkraftmaschine.

Elemente gleicher Konstruktion und Funktion sind figurenübergreifend mit dem gleichen Bezugszeichen gekennzeichnet.

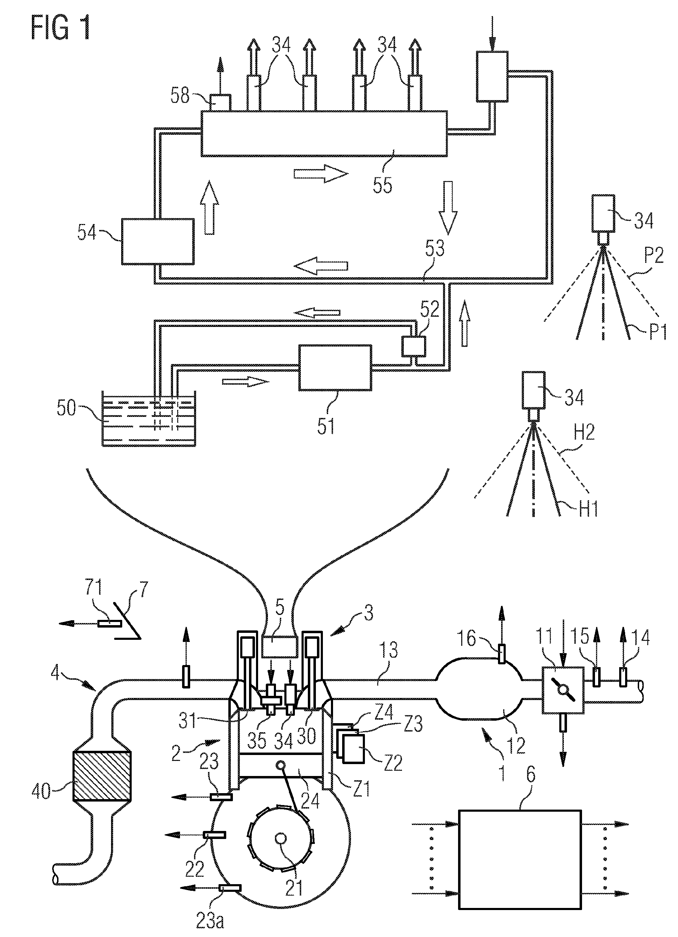

Eine Brennkraftmaschine (Figur 1) umfasst einen Ansaugtrakt 1, einen Motorblock 2, einen Zylinderkopf 3 und einen Abgastrakt 4. Der Ansaugtrakt umfasst vorzugsweise eine Drosselklappe 11, ferner einen Sammler 12 und ein Saugrohr 13, das hin zu einem Zylinder Z1 über einen Einlasskanal in den Motorblock geführt ist. Der Motorblock umfasst ferner eine Kurbelwelle 21, welche über eine Pleuelstange mit dem Kolben 24 des Zylinders Z1 gekoppelt ist.

Der Zylinderkopf 3 umfasst einen Ventiltrieb mit einem Einlassventil 30 und einem Auslassventil 31. Er umfasst ferner ein Einspritzventil 34 und eine Zündkerze 35. Alternativ kann das Einspritzventil 34 auch in dem Saugrohr 13 angeordnet sein. Der Abgastrakt 4 umfasst einen Katalysator 40.

Ferner ist eine Zuführeinrichtung 5 für Kraftstoff vorgesehen. Sie umfasst einen Kraftstofftank 50, der über eine erste Kraftstoffleitung mit einer Niederdruckpumpe 51 verbunden ist. Ausgangsseitig ist die Niederdruckpumpe 51 hin zu einem Zulauf 53 einer Hochdruckpumpe 54 wirkverbunden. Ferner ist auch ausgangsseitig der Niederdruckpumpe 51 ein mechanischer Regulator 52 vorgesehen, welcher ausgangsseitig über eine weitere Kraftstoffleitung mit dem Tank 50 verbunden ist.
Der Zulauf 53 ist hin zu der Hochdruckpumpe 54 geführt, welche ausgangsseitig den Kraftstoff hin zu einem Kraftstoffspeicher 55 fördert.

Das Einspritzventil 34 ist mit dem Kraftstoffspeicher 55 wirkverbunden. Der Kraftstoff wird somit dem Einspritzventil 34 über den Kraftstoffspeicher 55 zugeführt.

Die Einspritzventile 34 sind vorzugsweise mit einem piezoelektrischen Aktor versehen. Der piezoelektrische Aktor hat den Vorteil, dass der Hub der Düsennadel durch ihn variabel eingestellt werden kann.

Die unterschiedlichen Strahlkegel des aus dem Einspritzventil 34 austretenden Kraftstoffs sind anhand der vergrößerten Darstellungen des Einspritzventils 34 für einen Druckwert P1 und einen Druckwert P2 des Kraftstoffdrucks FUP dargestellt. Der Druckwert P1 ist niedriger als der Druckwert P2. Die unterschiedlichen Strahlkegel des aus dem Einspritzventil 34 austretenden Kraftstoffs sind anhand der vergrößerten Darstellungen des Einspritzventils 34 für einen Hubwert H1 und einen Hubwert H2 des Hubs der Düsennadel dargestellt. Der Hubwert H1 ist niedriger als der Hubwert H2.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in ein oder mehrere Stellsignale zum Steuern der Stellglieder mittels entsprechender Stellantriebe umgesetzt werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur TIM erfasst, ein Drucksensor 16, welcher den Saugrohrdruck erfasst, ein Kurbelwellenwinkelsensor 22, welcher einen Kurbelwellenwinkel erfasst, dem eine Drehzahl N zugeordnet wird, ein weiterer Temperatursensor 23, welcher eine Kühlmitteltemperatur TCO erfasst, ein weiterer Temperatursensor 23a, welcher eine Öltemperatur TOIL erfasst, ein Kraftstoffdrucksensor 58, welcher einen Kraftstoffdruck FUP in dem Kraftstoffspeicher 55 erfasst, und eine Sauerstoffsonde 41 welche einen Restsauerstoffgehalt des Abgases erfasst. Je nach Ausführungsform der Erfindung kann eine beliebige Untermenge der genannten Sensoren oder auch zusätzliche Sensoren vorhanden sein.

Die Stellglieder sind beispielsweise die Drosselklappe 11, die Gaseinlass- und Gasauslassventile 30, 31, das Einspritzventil 34 und die Zündkerze 35.

Die Brennkraftmaschine kann neben dem Zylinder Z1 auch noch weitere Zylinder Z2-Z4 umfassen, denen dann auch entsprechende Stellglieder zugeordnet sind.

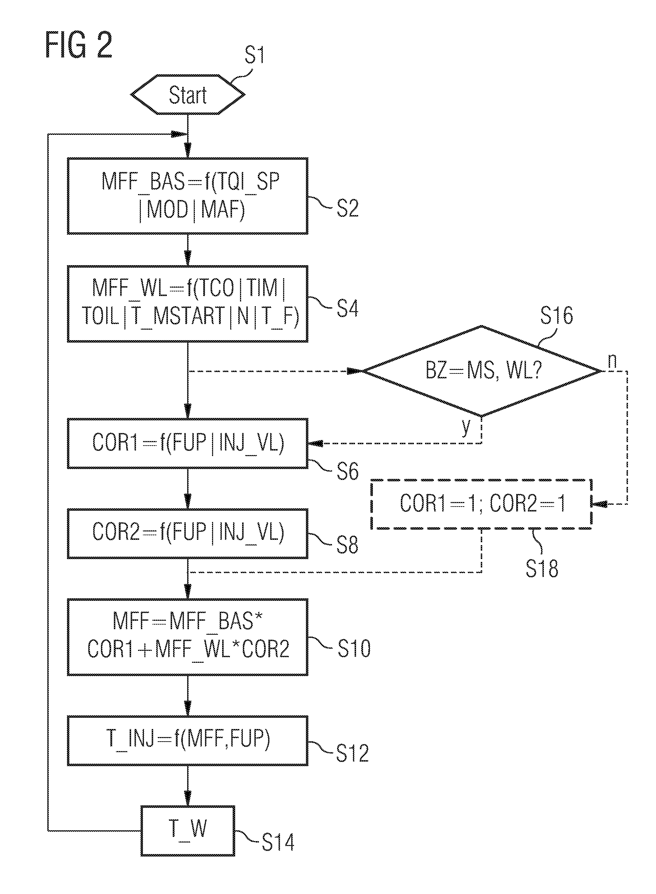

Ein Programm zum Steuern der Brennkraftmaschine wird in einem Schritt S1 (Figur 2) gestartet, in dem gegebenenfalls Variablen initialisiert werden. Der Start des Programms erfolgt zeitnah zu dem Start der Brennkraftmaschine.

In einem Schritt S2 wird ein Basiswert MFF_BAS der Kraftstoffmasse abhängig von einem Sollwert TQI_SP eines Drehmoments, das von der Brennkraftmaschine erzeugt werden soll, und einem Verbrennungsmodus MOD ermittelt. Der Sollwert TQI_SP des Drehmoments wird abhängig von der Stellung des Fahrpedals 7 und weiteren Drehmomentanforderungen, wie beispielsweise die einer Antriebsschlupfregelung, eines ABS-Systems oder einer Geschwindigkeitsregelung ermittelt. Der Verbrennungsmodus MOD der Brennkraftmaschine kann ein homogener Betrieb mit einem stöchiometrischen Luft/Kraftstoff-Verhältnis sein oder auch ein Magerbetrieb mit einer Luftzahl λ deutlich größer als 1, der insbesondere bei Brennkraftmaschinen mit Einspritzventilen, die im Zylinderkopf der Brennkraftmaschine angeordnet sind und den Kraftstoff direkt in den Brennraum des Zylinders Z1 zumessen, mit Schichtbetrieb bezeichnet wird.

Alternativ kann ebenfalls ein Verbrennungsmodus MOD der Anfettung des Luft/Kraftstoff-Gemisches vorliegen, bei dem die Luftzahl λ kleiner 1 ist. Der Basiswert MFF_BAS kann auch abhängig von einem Luftmassenstrom MAF ermittelt werden, der pro Ansaughub in den Zylinder Z1 strömt und ferner unter Berücksichtigung des Verbrennungsmodus MOD. Dies erfolgt vorzugsweise mittels eines Kennfeldes, kann aber auch alternativ oder zusätzlich mittels einer Regelung erfolgen.

In einem Schritt S4 wird ein Zusatzwert MFF_WL der Kraftstoffmasse abhängig von der Kühlmitteltemperatur TCO und/oder der Ansauglufttemperatur TIM und/oder der Öltemperatur TOIL und/oder der Zeitdauer T_MSTART seit dem Starten der Brennkraftmaschine und/oder einer Kraftstofftemperatur T_F und/oder einer Drehzahl N ermittelt. Dies erfolgt ebenfalls vorzugsweise mittels eines Kennfelds und entsprechende Kennfeldinterpolation. Der Zusatzwert MFF_WL berücksichtigt eine gegebenenfalls zusätzlich notwendige Kraftstoffmasse, wenn beispielsweise die Brennkraftmaschine ihre Betriebstemperatur noch nicht erreicht hat.

In einem Schritt S6 wird anschließend ein erster Korrekturwert COR1 abhängig von dem Kraftstoffdruck FUP und/oder einem Hub INJ VL der Düsennadel des Einspritzventils 34 ermittelt. Der erste Korrekturwert COR1 wird vorzugsweise aus einem Kennfeld mittels Kennfeldinterpolation ermittelt.

In einem Schritt S8 wird ein zweiter Korrekturwert abhängig von dem Kraftstoffdruck FUP und/oder dem Hub INJ_VL der Düsennadel des Einspritzventils 34 ermittelt. Auch der zweite Korrekturwert COR2 wird vorzugsweise aus einem Kennfeld mittels Kennfeldinterpolation ermittelt.

In einem Schritt S10 wird eine einzuspritzende Kraftstoffmasse MFF abhängig von dem Basiswert MFF BAS, dem ersten Korrekturwert COR1, dem Zusatzwert MFF WL der Kraftstoffmasse und dem zweiten Korrekturwert COR2 entsprechend der zu dem Schritt S10 angegebenen Beziehung ermittelt. Bevorzugt wird der Basiswert MFF BAS mit dem ersten Korrekturwert COR1 korrigiert und der Zusatzwert MFF_WL mittels des zweiten Korrekturwerts korrigiert. In einer einfacheren Ausgestaltung des Programms kann jedoch auch nur der Basiswert MFF_BAS oder nur der Zusatzwert MFF_WL korrigiert werden.

In einem Schritt S12 wird anschließend eine Einspritzzeitdauer T_INJ abhängig von der einzuspritzenden Kraftstoffmasse MFF und dem Kraftstoffdruck FUP ermittelt. Das Einspritzventil 34 wird anschließend für die vorgegebene in dem Schritt S12 ermittelte Einspritzzeitdauer T_INJ zum Zumessen von Kraftstoff angesteuert.

Anschließend verharrt das Programm in einem Schritt S14 für eine vorgegebene Wartezeitdauer T_W oder auch für einen vorgegebenen Kurbelwellenwinkel, bevor die Bearbeitung erneut in dem Schritt S2 fortgesetzt wird.

Bevorzugt wird nach dem Schritt S4 in einem Schritt S16 geprüft, ob der Betriebszustand BZ der Brennkraftmaschine der Motorstart MS oder der Warmlauf WL ist. Ist dies der Fall, so wird die Bearbeitung in dem Schritt S6 fortgesetzt. Ist dies hingegen nicht der Fall, so wird in einem Schritt S18 dem ersten und zweiten Korrekturwert ein neutraler Wert, so z.B. eins, zugeordnet und anschließend die Bearbeitung in dem Schritt S10 fortgesetzt. Dies hat den Vorteil, dass auf die Durchführung der Schritte S6 und S8 außerhalb der Betriebszustände BZ des Motorstarts MS und des Warmlaufs WL verzichtet werden kann und damit der Rechenaufwand geringer ist. Eine weitere Verringerung des Rechenaufwandes ergibt sich, wenn außerhalb der Betriebszustände BZ des Motorstarts MS und des Warmlaufs WL auch auf die Durchführung der Schritte S4 und S10 verzichtet wird und die einzuspritzende Kraftstoffmasse MFF einfach dem Basiswert MFF_BAS gleichgesetzt wird.

Der Betriebszustand BZ des Motorstarts MS wird vorzugsweise abhängig von der Drehzahl, und der Zeitdauer T_MSTART seit dem Start der Brennkraftmaschine eingenommen. Der Betriebszustand BZ des Warmlaufs WL wird vorzugsweise eingenommen, wenn eine die Betriebstemperatur der Brennkraftmaschine kennzeichnende Größe einen vorgegebenen Schwellenwert noch nicht erreicht hat.

## Patentansprüche

1. Verfahren zum Steuern einer Brennkraftmaschine mit einer Zuführeinrichtung (5) für Kraftstoff, mit der ein Einspritzventil (34) wirkverbunden ist, bei dem eine zuzumessende Kraftstoffmasse (MFF) abhängig von einer Lastgröße und einer das Strahlbild des zuzumessenden Kraftstoffs und/oder die Kraftstoffzerstäubung des Einspritzventils (34) kennzeichnenden Größe ermittelt wird.

2. Verfahren nach Anspruch 1,
**dadurch gekennzeichnet, dass**
die Größe, die das Strahlbild der zuzumessenden Kraftstoffmasse (MFF) und/oder die Kraftstoffzerstäubung des Einspritzventils (34) kennzeichnet, ein Kraftstoffdruck (FUP) in der Zuführeinrichtung (5) für Kraftstoff ist.

3. Verfahren nach einem der vorstehenden Ansprüche,
**dadurch gekennzeichnet, dass**
die Größe, die das Strahlbild der zuzumessenden Kraftstoffmasse (MFF) und/oder die Kraftstoffzerstäubung des Einspritzventils (34) kennzeichnet, eine Größe ist, die charakteristisch ist für den Hub (INJ_VL) einer Düsennadel des Einspritzventils (34).

4. Verfahren nach einem der vorstehenden Ansprüche,
**dadurch gekennzeichnet, dass**
ein Basiswert (MFF_BAS) der Kraftstoffmasse abhängig von einer Lastgröße ermittelt wird und der Basiswert (MFF_BAS) abhängig von einem ersten Korrekturwert (COR1) korrigiert wird, der abhängt von dem Kraftstoffdruck (FUP) und/oder dem Hub (INJ_VL) der Düsennadel.

5. Verfahren nach einem der Ansprüche 1 bis 3,
**dadurch gekennzeichnet,**
- **dass** ein Basiswert (MFF_BAS) der Kraftstoffmasse abhängig von einer Lastgröße ermittelt wird,
- **dass** ein Zusatzwert (MFF_WL) der Kraftstoffmasse abhängig von einer Kühlmitteltemperatur (TCO) und/oder einer Ansauglufttemperatur (TIM) und/oder einer Öltemperatur (TOIL) und/oder einer Kraftstofftemperatur (T_F) und/oder einer Zeitdauer (T_MSTART) seit dem Motorstart der Brennkraftmaschine und/oder der Drehzahl (N) ermittelt wird,
- **dass** der Zusatzwert (MFF_WL) der Kraftstoffmasse abhängig von einem zweiten Korrekturwert (COR2) korrigiert wird, der abhängt von dem Kraftstoffdruck (FUP) und/oder dem Hub (INJ VL) der Düsennadel, und
- **dass** eine zuzumessende Kraftstoffmasse (MFF) abhängig von dem Basiswert (MFF_BAS) und dem korrigierten Zusatzwert (MFF_WL) ermittelt wird.

6. Verfahren nach einem der Ansprüche 1 bis 3,
**dadurch gekennzeichnet,**
- **dass** ein Basiswert (MFF_BAS) der Kraftstoffmasse abhängig von einer Lastgröße ermittelt wird,
- **dass** der Basiswert (MFF_BAS) abhängig von einem ersten Korrekturwert (COR1) korrigiert wird, der abhängt von dem Kraftstoffdruck (FUP) und/oder dem Hub (INJ_VL) der Düsennadel,
- **dass** ein Zusatzwert (MFF_WL) der Kraftstoffmasse abhängig von einer Kühlmitteltemperatur (TCO) und/oder einer Ansauglufttemperatur (TIM) und/oder einer Öltemperatur (TOIL) und/oder einer Kraftstofftemperatur (T_F) und/oder einer Zeitdauer (T_MSTART) seit dem Motorstart der Brennkraftmaschine und/oder der Drehzahl (N) ermittelt wird,
- **dass** der Zusatzwert (MFF_WL) der Kraftstoffmasse abhängig von einem zweiten Korrekturwert (COR2) korrigiert wird, der abhängt von dem Kraftstoffdruck (FUP) und/oder dem Hub (INJ VL) der Düsennadel, und
- **dass** eine zuzumessende Kraftstoffmasse (MFF) abhängig von dem korrigierten Basiswert und dem korrigierten Zusatzwert ermittelt wird.

7. Verfahren nach einem der vorstehenden Ansprüche,
**dadurch gekennzeichnet, dass**
die zuzumessende Kraftstoffmasse (MFF) abhängig von der das Strahlbild der zuzumessenden Kraftstoffmasse und/oder die Kraftstoffzerstäubung des Einspritzventils (34) kennzeichnenden Größe lediglich in einem Betriebszustand (BZ) des Motorstarts (MS) und/oder des Warmlaufs (WL) ermittelt wird.

8. Vorrichtung zum Steuern einer Brennkraftmaschine mit einer Zuführeinrichtung (5) für Kraftstoff, mit der ein Einspritzventil (34) wirkverbunden ist, mit Mitteln zum Ermitteln einer zuzumessenden Kraftstoffmasse abhängig von einer Lastgröße und einer das Strahlbild der zuzumessenden Kraftstoffmasse (MFF) und/oder die Kraftstoffzerstäubung eines Einspritzventils kennzeichnenden Größe.
